# EUROPEAN PATENT APPLICATION

(11) **EP 2 361 821 A1**
(43) Date of publication of application: **31.08.2011**
(21) Application number: 11155081.0
(22) Date of filing: 18.02.2011
(51) Int. Cl.: B62D 5/30, B62D 7/14, B62D 13/02

(54) **A vehicle and a combination of a towing vehicle and a towed vehicle, comprising a main steering system and an auxiliary steering system provided with a back-up steering system**

(30) Priority: 26.02.2010 NL 1037753
(71) Applicant: V.S.E. Vehicle Systems Engineering B.V., 3905 NV Veenendaal (NL)
(72) Inventor: Van der Krol, Jan-Willem, 3749 AM, Lage Vuursche (NL); De Zaaijer, Richard Johannes Wilhelmus, 4041 AH, Kesteren (NL)
(74) Representative: Algemeen Octrooi- en Merkenbureau

(57) **Abstract**

The present invention relates to a vehicle comprising a chassis, a driving motor for driving the vehicle, a main steering system which can be controlled by a user of the vehicle, a hydraulic auxiliary steering system (20) comprising auxiliary steering wheels, which vehicle comprises a hydraulic main steering pump (4) connected to the auxiliary steering system for generating a fluid flow and supplying said fluid flow to the auxiliary steering system. The vehicle further comprises a back-up steering system for the auxiliary steering system, comprising a hydraulic back-up steering pump (22) for generating a further fluid flow and supplying said fluid flow to the auxiliary steering system, which back-up steering system is provided with switching means (32) which, in a first position thereof, in which a fluid flow detected by the detecting means (40) is higher than a threshold value, hydraulically connect the main steering pump to the auxiliary steering system and which, in a second position, hydraulically connect the back-up steering pump to the auxiliary steering system. The present invention also relates to a combination of a towing vehicle and a towed vehicle.

## Description

A vehicle and a combination of a towing vehicle and a towed vehicle, comprising a main steering system and an auxiliary steering system provided with a back-up steering system.

### DESCRIPTION

The present invention relates to a vehicle comprising a chassis, a driving motor for driving the vehicle, a main steering system comprising leading steered wheels, which main steering system can be controlled by a user of the vehicle for setting an angular position of the steered wheels relative to the chassis, a hydraulic auxiliary steering system comprising auxiliary steering wheels, an angular position of which can be set by hydraulic means, which vehicle comprises a hydraulic main steering pump connected to the auxiliary steering system for generating a fluid flow and supplying said fluid flow to the auxiliary steering system.

The present invention further relates to a combination of a towing vehicle and a towed vehicle.

A known vehicle, more specifically a truck, has a steered front axle with a mechanical main steering system. That is, the wheels of the front axle are mechanically connected to the steering wheel of the truck. The mechanical main steering system is provided with a hydraulic power steering system, which is fed with fluid (oil) by means of a steering pump driven by the driving motor of the truck. The truck is also provided with an electronically controlled hydraulic auxiliary steering system on an axle disposed behind the front axle, for example on an auxiliary steering rear axle. The auxiliary steering system is connected to a further steering pump of the truck for hydraulic actuation of the auxiliary steering system, which further steering pump is driven by the driving motor. Furthermore there are known vehicles similar to the above-described known vehicle comprising more than one steered axle and/or one or more non-steering or, in other words, rigid axles. A drawback of such known vehicles provided with a known auxiliary steering system as described above is that only a small range of vehicle combinations can be realised within the prevailing requirements of safety and steerability in the case of a failure of a steering system. Accordingly it is an object of the present invention to provide a vehicle which can be realised in a large number of variations, having regard to the aforesaid requirements of steerability in the case of a failure of a steering system. This object is accomplished with the vehicle according to the present invention, which is characterised in that the vehicle further comprises a back-up steering system for the auxiliary steering system, comprising a hydraulic back-up steering pump for generating a further fluid flow and supplying said further fluid flow to the auxiliary steering system, which back-up steering system is provided with switching means which, in a first position thereof, hydraulically connect the main steering pump to the auxiliary steering system and which, in a second position thereof, hydraulically connect the back-up steering pump to the auxiliary steering system, and with detecting means for detecting the fluid flow being supplied to the auxiliary steering system by the main steering pump, which switching means will be in the first position if the fluid flow detected by the detecting means is higher than a threshold value and in the second position if the fluid flow detected by the detecting means is lower than said threshold value. The vehicle according to the present invention has the advantage that, as a result of the use of the aforesaid back-up steering system for the auxiliary steering system, the steerability of the vehicle is still retained to a high degree in the case of a failure of the main steering pump of the auxiliary steering system, or at least in the case of a failure of components connected thereto, such as a line which connects the main steering pump to the auxiliary steering system, so that said steerability will remain within the applicable requirements, for example requirements relating to the attainable turning circle of the vehicle. So far, vehicles have been designed to remain within the aforesaid requirements in the case of a failure of the auxiliary steering system. The use of the back-up steering system according to the present invention makes it possible to design the vehicle to be longer, for example, or to fit an additional axle so as to increase the load carrying capacity.

Preferably, the main steering pump is driven by the vehicle's driving motor, at least in use. Having the main steering pump for the auxiliary steering system driven by the driving motor has the advantage that, for cost-related reasons, such a steering pump is an advantageous and robust solution for supplying a fluid flow to the auxiliary steering system.

It is noted within this framework that another known vehicle similar to the above-described known vehicle comprises only one steering pump driven by the driving motor, which pump supplies fluid both to power steering system of the main steering system and to the auxiliary steering system. Failure of said steering pump would result in failure of the power steering system as well as the auxiliary steering system. If this were to take place in use, i.e. while the vehicle is driving, this would lead to a dangerous situation. To obviate this drawback, the main steering system of said further known vehicle comprises a back-up steering pump for the power steering system. Thus the power steering system will continue to function in the case of a failure of the main steering pump, and the vehicle will remain steerable in spite of the failure of the auxiliary steering system. The vehicle is furthermore designed to remain within the applicable steerability requirements in such a situation, i.e. with the auxiliary steering system no longer functioning and, thanks to the action of the back-up steering pump, the power steering still being operational. To enable the back-up steering pump for the power steering system to operate, a so-called dual circuit steering gear, i.e. the steering gear comprises two hydraulic circuits (one circuit for connection to the main steering pump and one circuit for connection to the back-up steering pump) as well as switching means are provided at the steering gear to enable the power steering system to operate, which switching means cause the main steering pump to change over to the back-up steering pump automatically upon failure of the main steering pump, so that the power steering system will remain operational. The present inventor has realised, however, that this is a complex and costly solution, and that it is possible to achieve the same effect, i.e. an adequate steerability in the case of a failure of the main steering pump as described above, and thus a vehicle that will remain within the applicable steerability requirements in such a situation, if a back-up steering system for the auxiliary steering system is provided. The inventor has moreover realised that the steering effect of an auxiliary steering system which, in spite of a failure of the main steering pump for the auxiliary steering system, is still operational (thanks to the action of the back-up steering system), is relatively strong, making it possible to realise a larger variety of vehicle configurations than has been possible so far in view of the aforesaid requirements. In many cases it is even no longer necessary to provide a back-up steering pump for the main steering system, and thus a relatively costly dual circuit steering gear housing. It has thus been achieved that, in spite of the ensuing lower degree of steerability of the main steering system in the case of a failure of the power steering system, the vehicle will still continue to meet the applicable steerability requirements on account of the fact that the auxiliary steering system will remain operational. Such a back-up steering system for the auxiliary steering system can be realised in a simple and cost-effective manner.

It is furthermore noted that EP 974 508 discloses another known vehicle. Said known vehicle has front wheels whose angular position can be set by means of a hydraulic cylinder, which hydraulic cylinder is connected to a steering wheel of the vehicle via a hydraulic steering system. The angular position of the rear wheels of the vehicle can be set by means of a further hydraulic cylinder, which is connected to a control valve. The required hydraulic pressure for the hydraulic steering system and the control valve is provided by a main pump. In the case of a failure of the main pump, the supply of oil to the control valve will be blocked and only the hydraulic steering system will be provided with oil by a back-up pump. The further hydraulic cylinder of the rear wheels is also directly connected to the hydraulic cylinder of the front wheels, so that all the wheels will be steered by the hydraulic steering system in that situation.

In an alternative preferred embodiment, the main steering pump is driven by an electric motor, at least in use. An advantage of this is that no provisions need to be made for the main steering pump of the auxiliary steering system at the location of the vehicle's driving motor. Thus, one design for the main steering pump and the electric motor connected thereto can be provided, which design can be used with a large variety of vehicles and motor types.

Within the framework of the present invention, the term "hydraulic auxiliary steering system" is understood to mean an auxiliary steering system in which steerable wheels are operatively connected to a hydraulic piston/cylinder combination, and in which an angular position of the steerable wheels relative to a chassis portion on which the auxiliary steering system is present can be set through hydraulic actuation of the piston/cylinder combination. The vehicle on which the auxiliary steering system is provided further comprises a hydraulic steering pump which provides a fluid flow from a reservoir to the auxiliary steering system for actuating the piston/cylinder combination. If the auxiliary steering system comprises a control system for hydraulically actuating the piston/cylinder combination underlayer influence of an electric control signal, the auxiliary steering system is an electronically controlled hydraulic auxiliary steering system. Generally it is furthermore desirable for the angular position of the auxiliary steering wheels associated with the aforesaid auxiliary steering system, which wheels are for example disposed at the location of a rear axle of the vehicle, to be set in dependence on the angular position of leading steered wheels of a main steering system, for example at the location of a steered front axle of the vehicle. Such an auxiliary steering system may furthermore also be present on a towed vehicle, for example, such as a semi-trailer of a tractor-trailer combination, in which case the steering of the auxiliary steering wheels takes place in dependence on the angle between the tractor and the semi-trailer. In both cases detecting means are usually provided for detecting the angular position of the leading steered wheels and/or for detecting the angular position between the tractor and the semi-trailer, said detecting means being connected to the control system of the auxiliary steering system by electronic means for transmitting the aforesaid detected angular position, or at least a signal dependent thereon, to the control system as a control signal for actuating the piston/cylinder combination of the auxiliary steering system.

In a simple and, for cost-related reasons, advantageous preferred embodiment, the back-up steering pump is operatively connected to a wheel of the vehicle, so that the back-up steering pump can be driven by rotation of a wheel of the vehicle. A back-up steering pump thus connected to a wheel, furthermore preferably to the driving line of the vehicle, operates independently of the state of the driving motor when the vehicle is driving. An advantageous location for the connection between the driving line and the back-up steering pump is the outgoing shaft of the vehicle transmission.

In an alternative advantageous preferred embodiment, the back-up steering pump is driven by a further electric motor, at least in use. This makes it possible to activate said further electric motor only in the case of a failure of the main steering pump, thus providing a very efficient back-up steering system. According to another possibility, said further electric motor may be driven continuously albeit very slowly, or, for example, at intervals (so that the back-up steering pump will be minimally loaded), so that the fluid flow thus generated can be detected by means of a sensor, so that the back-up steering pump can be monitored for correct functioning during the use of the vehicle.

It is advantageous in this regard if the switching means comprise circulation means for recirculation to a reservoir of fluid supplied to the switching means from said reservoir by the back-up steering pump in the first position. This achieves that the above-described operation of the back-up steering pump during normal use of the vehicle will result in only a minimal energy loss, if at all.

The main steering system is preferably a mechanical steering system provided with a hydraulic power steering system, whilst furthermore preferably the main steering pump is also connected to the power steering system for providing a fluid flow both to the power steering system of the main steering system and to the auxiliary steering system.

It is advantageous in this regard if the vehicle is provided with a fluid flow splitter which is hydraulically connected to the main steering pump via an inlet port, which is hydraulically connected to the power steering system via a first outlet port and which is hydraulically connected to the auxiliary steering system via a second outlet port, for splitting the fluid flow generated by the main steering pump into a first part of the flow to the power steering system and a second part of the flow to the auxiliary steering system.

It is advantageous if the back-up steering pump is also connected to the power steering system for supplying a fluid flow both to the power steering system of the main steering system and to the auxiliary steering system in the second position of the switching means.

Alternatively, the main steering system comprises a single circuit steering gear in which the power steering system is accommodated. That is, the vehicle does not comprise a back-up steering system for the main steering system in that case.

In an advantageous preferred embodiment, the auxiliary steering system is designed to set an angular position of auxiliary steering wheels provided on a number of respective axles provided on the vehicle. Said axles may concern a number of rear axles of a vehicle, for example, which are each provided with auxiliary steering wheels. The vehicle in total comprises three rear axles, for example, two of which are provided with auxiliary steering wheels, and one of which is a so-called rigid axle. Said three rear axles are for example a pusher axle and a tag axle, with a rigid axle therebetween. In another example, the vehicle comprises a second front axle, a rigid axle and one or more tag axles, in which case the second front axle and the tag axles are provided with auxiliary steering wheels.

Alternatively, or in combination with the preferred embodiment described directly above, it is advantageous if the vehicle comprises a number of axles provided with auxiliary steering wheels, which vehicle further comprises a number of auxiliary steering systems each designed to set an angular position of auxiliary steering wheels mounted on a separate axle of said number of axles. Thus, the angular position of auxiliary steering wheels on different respective axles can be set separately by said number of respective auxiliary steering systems.

It is advantageous in that regard if the switching means are designed to hydraulically connect the back-up steering pump to at least one of said number of auxiliary steering systems in the second position of said switching means. By connecting the back-up steering pump to a number of (not necessarily all) auxiliary steering systems in the second position of the switching means, it is achieved, using a single back-up steering pump, that the auxiliary steering wheels mounted on at least one of said number of axles will remain operational in the case of a failure of the main steering pump.

The above advantages of the vehicle according to the present invention likewise apply in the case of a tractor-semitrailer combination, in which the main steering system is present on the tractor and the auxiliary steering system is present on the semitrailer. Consequently, the present invention also relates to a combination of a towing vehicle and a towed vehicle according to claim 13. The main steering pump may be mounted on the towing vehicle or on the towed vehicle. The same applies as regards the back-up steering pump. Preferably, both the main steering pump and the back-up steering pump are provided on the towing vehicle. For layout reasons, this is the most advantageous solution.

The present invention will now be explained in more detail by means of a description of a preferred embodiment of the vehicle according to the present invention, in which reference is made to the following figures.
Figure 1 shows a hydraulic diagram comprising a back-up steering system for use in a vehicle according to the present invention;
Figure 2 shows the diagram of figure 1 in another operational state of the vehicle according to the present invention;
Figures 3a and 3b schematically show a vehicle and a vehicle according to the present invention, respectively.

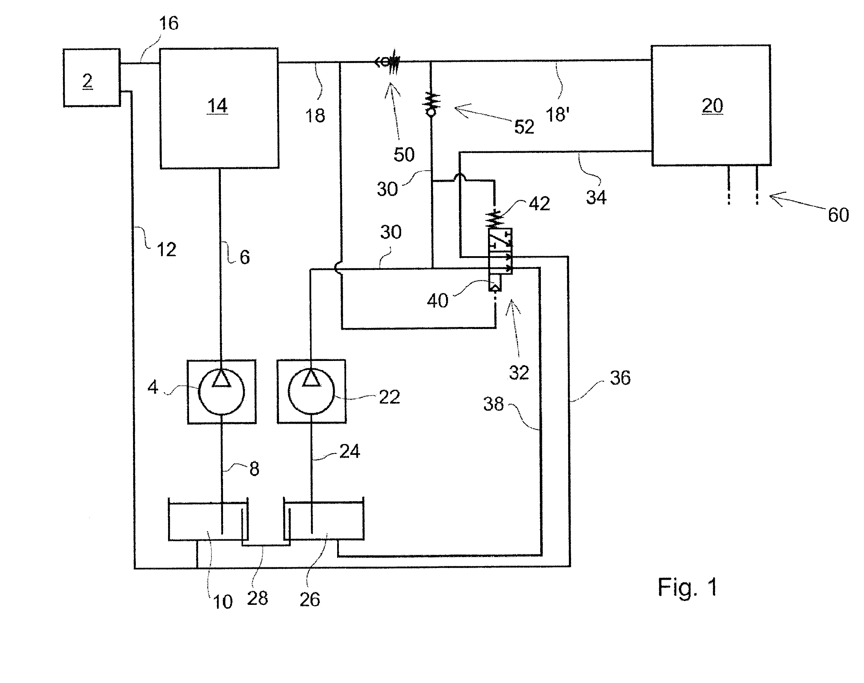

Figure 1 shows a diagram of the steering system and the back-up steering system of a truck. Said truck has a steered front axle, whose wheels can be steered, using a main steering system, by a driver of the truck. Said main steering system is a mechanical main steering system, but in another embodiment it may also be a different type of steering system, for example a hydraulic steering system. The mechanical main steering system has a single circuit steering gear 2, which accommodates a hydraulic power steering system. It is also possible to use a dual circuit steering gear housing. A main steering pump 4 is provided for actuating the power steering system, which main steering pump is driven by the driving motor of the truck (not shown). Said driving motor is preferably a combustion engine, but it may also be a different type of motor, for example a hydraulic motor or an electric motor. According to another possibility, the main steering pump is driven by a motor other than the driving motor, for example by a separate electric motor. As long as the driving motor is in use, it is thus possible to generate a fluid flow by means of the main steering pump 4, which fluid flow is supplied to the power steering system in the steering gear 2 via a main line 6. The main steering pump 4 is further connected, via an inlet port thereof, to a suction line 8, which suction line 8 opens into a first reservoir 10. From the steering gear 2, a return line 13 for the fluid leads back to the reservoir.

A fluid flow splitter 14 is fitted in the main line 6. Said fluid flow splitter is connected to the main line 6 via an inlet port and, via a first outlet port, to a line 16 which connects the fluid flow splitter 14 to the steering gear 2, as well as to an electronically controlled hydraulic auxiliary steering system 20 (yet to be described in more detail) via a further line 18 (and via a line 18').

The truck according to the present invention has a hydraulically steered rear axle in addition to the mechanically steered front axle. Within the framework of the present invention it is not relevant whether the hydraulically steered axle is a rear axle or a further front axle. The hydraulically steered rear axle is actuated by a piston/cylinder combination of the auxiliary steering system 20, which is connected to the auxiliary steering wheels. Think in this connection of providing a steering rod between the wheels of the axle in question, which steering rod is connected to a piston rod of the piston/cylinder combination, whilst the cylinder is connected to the chassis of the truck. By forcing fluid into and out of the cylinder chamber of the cylinder, it is thus possible to realise a specific angular position of the wheels relative to the chassis. A linear sensor (which measures movement of the piston rod) may be used, for example, for providing feedback of the angular position of the auxiliary steering wheels to the control unit. Said feedback of the angular position may also be realised by using a rotation sensor, for example, mounted on a stub axle of an auxiliary steering wheel. Such a hydraulic auxiliary steering device functions to enhance the steerability of the truck. The truck to that end comprises a sensor which senses the angular position of the wheels of the main steering system and passes on said angular position to a control unit of the auxiliary steering system, so that said control unit can set the angular position of the auxiliary steering wheels of the auxiliary steering system, inter alia in dependence on the angular position of the wheels of the main steering system. Said sensor may be a rotation sensor mounted on the steering gear or on a stub axle. Furthermore, there may be provided a sensor which makes a measurement related to the speed of the truck and presents a signal dependent thereon to the control unit, so that the angular position of the auxiliary steering wheels can also be set in dependence on the speed of the truck. This leads to the advantage that the truck will have a smaller turning circle at a relatively low speed, for example, and a higher stability at a relatively high speed.

The hydraulic auxiliary steering system 20 is connected, via the connecting line 18, the fluid flow splitter 14 and the main line 6, to the same main steering pump 4 as the main steering system. It is also possible within the framework of the present invention to connect the auxiliary steering system 20 to a separate main steering pump provided on the driving motor of the truck, for example in case the capacity of the main steering pump 4 should not be sufficient.

The function of the fluid flow splitter 14 is to split the fluid supplied via the main line 6 into a part that is supplied to the power steering system in the steering gear 2 (via the line 16) and a part that is supplied to the hydraulic auxiliary steering system (via the connecting line 18). If the driving motor of the truck should fail, for example due to a malfunction or, for example, a lack of fuel, the supply of fluid to the power steering system of the main steering system as well as the supply of fluid to the hydraulic auxiliary steering system is stopped. The steerability of the truck thus decreases to a considerable extent. To obviate this drawback, the truck is equipped with a back-up steering system, which comprises a back-up steering pump 22. The back-up steering pump 22 is connected to the driving line of the truck, that is, the back-up steering pump is operatively connected to a wheel of the truck, so that the back-up steering pump can be driven by rotation of a wheel of the vehicle independently of the state of the driving motor of the truck. The back-up steering pump 22 may also be connected to an electric motor, for example, so that it can also be actuated independently of the state of the driving motor of the truck. In use, the back-up steering pump 22 draws in fluid from a reservoir 26 via a suction line 24. The reservoir 10 and the reservoir 26 are connected, via an open connecting line 28, above a predetermined safety level, so that on the one hand the level in the two reservoirs will not rise too high (resulting in leakage) and on the other hand drainage of one reservoir will not result in drainage of the other reservoir as well. On the outlet side, the back-up steering pump 22 is connected to a switching valve 32 via a line 30.

In figure 1 the normal operating state of the truck is shown. In this state, the main steering pump 4 supplies a fluid flow to the auxiliary steering system 20 via the mainline 6, the fluid flow splitter 14 and the connecting line 18, as described above. The auxiliary steering system 20 is connected to the switching valve 32 via a return line 34. In figure 1 the first position is operative, in which first position the return line 34 of the auxiliary steering system 20 is connected to a further return line 36, so that fluid can flow back from the auxiliary steering system 20 into the reservoir 10 via the line 34 and the line 36. Since the back-up steering pump 22 is connected to the driving line of the truck, said back-up steering pump will be operative during operation of the truck, i.e. when the truck is driving, and generate a fluid flow in the line 30. In the first position of the switching valve 32, the switching valve places the line 30 and a line 38 in open communication with each other, as a result of which the back-up steering pump 22 circulates fluid from and to the reservoir 26, at least in the first position of the switching valve 32 (with a minimal overpressure, if any). The energy loss involved in the circulation as described above is minimal.

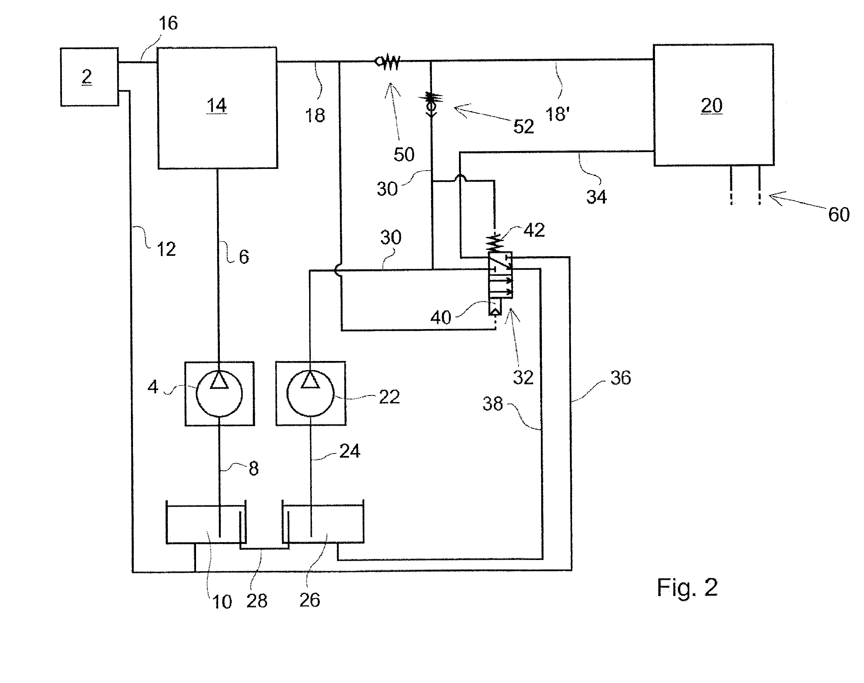

The switching valve 32 is provided with detection means made up of a control connection 40, which is in communication with the line 18. The switching valve 32 furthermore has a spring 42, which functions as a spring return for a valve disc of the switching valve 32. When the main steering pump 4 is active, generating a fluid flow at an elevated pressure in the line 18, the fluid pressure on a control port 40 of the switching valve 32 will be such that the valve disc of the switching valve 32 is moved against the spring force exerted by the spring 42, so that the switching valve 32 will be in the first position shown in figure 1. In the case of a failure of the main steering pump 4, for example due to failure of the driving motor, also the fluid pressure in the line 18 will fall out, as a result of which the switching valve 32, more specifically the valve disc thereof, will switch from the first position to the second position shown in figure 2 under the influence of the spring return 42 thereof. In said second position of the switching valve 32, the connection between the line 30 and the line 38 is broken, as a result of which the back-up steering pump 22 can build up a pressure in the line 30 and an elevated pressure fluid flow is effected from the back-up steering pump 22, via the line 30 and the line 18', to the auxiliary steering system 20. Such detection means may also be configured as electrical detection means, in which case the presence of the fluid flow is detected by sensor, for example, and an actuator is driven to switch the switching means from the first position to the second position if the flow in the line 18 drops below a preset threshold value. A non-return valve 50 is fitted between the line 18 and the line 18', which valve enables fluid to flow from the main steering pump 4 to the auxiliary steering system 20 in the normal operating state shown in figure 1, but which prevents fluid from flowing back in the direction of the main steering pump 4 via the non-return valve 50 in the case of a failure of the main steering pump 4, and with the back-up steering pump 22 being in its active state as shown in figure 2. In the situation shown in figure 1, fluid is prevented from flowing from the line 18' to the line 30 by the non-return valve 52, which blocks the connection between the line 30 and the line 18, 18', since hardly any, if any, pressure is being built up in the line 30.

Thus, as shown in figure 2, the back-up steering pump 22 is connected to the auxiliary steering system 20 via the line 30 and the line 18'. In the second position of the switching valve 32, the return line 34 of the auxiliary steering system 20 is further connected to a line 38, enabling fluid to flow back from the auxiliary steering system 20, via the lines 34 and 38, into the reservoir 26.

Thus, a very simple switching arrangement is obtained by using the above-described switching valve 32 in combination with the non-return valves 50 and 52, wherein the back-up steering pump 22 will be operatively connected to the auxiliary steering mechanism 20 in the case of a failure of the main steering pump 4. Since the auxiliary steering system 20 will still be operative in such a situation, the driver will still have sufficient control over the truck in spite of the hydraulic power steering system dropping out, thus enhancing the degree of safety in such a situation.

It is further noted that it is advantageous if further sensors are provided for monitoring the system, for example for monitoring the presence of a fluid flow in a particular line, for monitoring the position of the switching means, etc. It is also advantageous if the switching means, including as great a part of the lines as possible, are integrated in a hydraulic block and preferably placed directly against the auxiliary steering system, so that the presence of lines in the form of hoses or inflexible pipes, for example made of a metal, is prevented as much as possible, as a result of which the system will be less susceptible to failure.

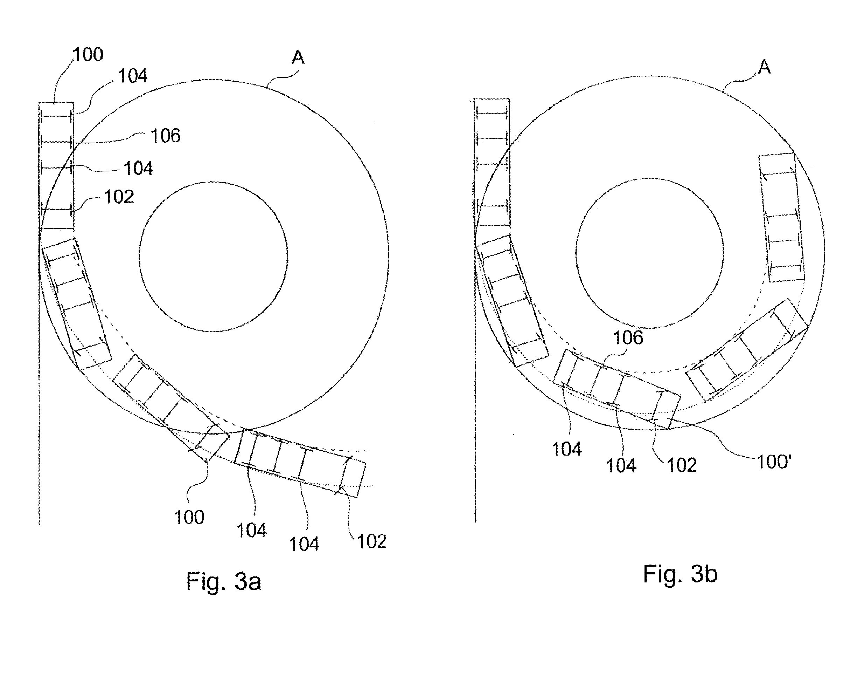

The advantage of a vehicle provided with a back-up steering system according to the present invention is visualised in figures 3a and 3b. Figure 3a schematically shows a vehicle 100 comprising a steered front axle 102, two auxiliary steering rear axles 104 (both actuated by a respective auxiliary steering system), and a rigid rear axle 106 therebetween. The vehicle 100 does not have a back-up steering system for the auxiliary steering systems, so that the vehicle will no longer be able to turn within the required turning circle A in the case of a failure of the main steering pump for the auxiliary steering systems, as is shown in figure 3a. Thus, the vehicle 100 does not comply with the applicable requirements regarding steerability in the case of a failure of a main steering pump of an auxiliary steering system.

The vehicle 100' according to the present invention that is shown in figure 3b, on the contrary, does have a back-up steering system for the auxiliary steering systems connected to the auxiliary steering axles 104. In the case of a failure of the main steering pump of the auxiliary steering systems, the back-up steering pump of the back-up steering system will be activated, as a result of which the vehicle 100' will be able to turn within the required turning circle, as is shown in figure 3b. Thus, the vehicle 100' according to the present invention does meet the applicable requirements regarding steerability in the case of a failure of a main steering pump of an auxiliary steering system.

## Claims

1. A vehicle comprising a chassis, a driving motor for driving the vehicle, a main steering system comprising leading steered wheels, which main steering system can be controlled by a user of the vehicle for setting an angular position of the steered wheels relative to the chassis, a hydraulic auxiliary steering system (20) comprising auxiliary steering wheels, an angular position of which can be set by hydraulic means, in dependence on the angular position of the leading steered wheels, which vehicle comprises a hydraulic main steering pump (4) connected to the auxiliary steering system for generating a fluid flow and supplying said fluid flow to the auxiliary steering system, **characterised in that** the vehicle further comprises a back-up steering system for the auxiliary steering system, comprising a hydraulic back-up steering pump (22) for generating a further fluid flow and supplying said further fluid flow to the auxiliary steering system, which back-up steering system is provided with switching means (32) which, in a first position thereof, hydraulically connect the main steering pump to the auxiliary steering system and which, in a second position thereof, hydraulically connect the back-up steering pump to the auxiliary steering system, and with detecting means (40) for detecting the fluid flow being supplied to the auxiliary steering system by the main steering pump, which switching means will be in the first position if the fluid flow detected by the detecting means is higher than a threshold value and in the second position if the fluid flow detected by the detecting means is lower than said threshold value.

2. A vehicle according to claim 1, **characterised in that** the main steering pump (4) is driven by the vehicle's driving motor, at least in use, or the main steering pump (4) is, at least in use, driven by an electric motor.

3. A vehicle according to either one of the preceding claims, **characterised in that** the back-up steering pump (22) is operatively connected to a wheel of the vehicle, so that the back-up steering pump can be driven by rotation of a wheel of the vehicle.

4. A vehicle according to either one of claims 1 and 2, **characterised in that** the back-up steering pump (22) is driven by a further electric motor, at least in use.

5. A vehicle according to any one of the preceding claims, **characterised in that** the switching means (32) comprise circulation means for recirculation to a reservoir (26) of fluid supplied to the switching means from said reservoir by the back-up steering pump (22) in the first position.

6. A vehicle according to any one of the preceding claims, **characterised in that** the main steering system is preferably a mechanical steering system provided with a hydraulic power steering system.

7. A vehicle according to claim 6, **characterised in that** the main steering pump (4) is also connected to the power steering system for providing a fluid flow both to the power steering system of the main steering system and to the auxiliary steering system (20).

8. A vehicle according to claim 6 or 7, **characterised in that** the back-up steering pump (22) is also connected to the power steering system for supplying a fluid flow both to the power steering system of the main steering system and to the auxiliary steering system in the second position of the switching means (32).

9. A vehicle according to claim 6 or 7, **characterised in that** the main steering system comprises a single circuit steering gear (2) in which the power steering system is accommodated.

10. A vehicle according to any one of the preceding claims, wherein the auxiliary steering system (20) is designed to set an angular position of auxiliary steering wheels provided on a number of respective axles provided on the vehicle.

11. A vehicle according to any one of the preceding claims, comprising a number of axles provided with auxiliary steering wheels, wherein the vehicle further comprises a number of auxiliary steering systems (20) each designed to set an angular position of auxiliary steering wheels mounted on a separate axle of said number of axles.

12. A vehicle according to claim 11, wherein the switching means (32) are designed to hydraulically connect the back-up steering pump (22) to at least one of said number of auxiliary steering systems (20) in the second position of said switching means.

13. A combination of a towing vehicle and a towed vehicle, wherein the towed vehicle is hitched to the towing vehicle by means of a coupling, being pivotable about an at least substantially vertical axis, said towing vehicle comprising a chassis, a driving motor for driving the vehicle, and a main steering system comprising leading steered wheels, which main steering system can be controlled by a user of the vehicle for setting an angular position of the steered wheels relative to the chassis, said towed vehicle comprising a hydraulic auxiliary steering system comprising auxiliary steering wheels, an angular position of which can be set by hydraulic means, in dependence on the angular position between the towing vehicle and the towed vehicle, which combination comprises a hydraulic main steering pump connected to the auxiliary steering system for generating a fluid flow and supplying said fluid flow to the auxiliary steering system, **characterised in that** the combination further comprises a back-up steering system for the auxiliary steering system, comprising a hydraulic back-up steering pump for generating a further fluid flow and supplying said further fluid flow to the auxiliary steering system, which back-up steering system is provided with switching means which, in a first position thereof, hydraulically connect the main steering pump to the auxiliary steering system and which, in a second position thereof, hydraulically connect the back-up steering pump to the auxiliary steering system, and with detecting means for detecting the fluid flow being supplied to the auxiliary steering system by the main steering pump, which switching means will be in the first position if the fluid flow detected by the detecting means is higher than a threshold value and in the second position if the fluid flow detected by the detecting means is lower than said threshold value.
